# EUROPÄISCHE PATENTANMELDUNG

(11) **EP 4 242 034 A1**
(43) Veröffentlichungstag der Anmeldung: **13.09.2023**
(21) Anmeldenummer: 23154860.3
(22) Anmeldetag: 03.02.2023
(51) Int. Cl.: B60K 35/00, B60K 37/06

(54) **FUNKTIONSANZEIGE ZUR SELEKTIVEN ANZEIGE MEHRERER, JEWEILS EINE SCHALTFUNKTION UND/ODER SCHALTZUSTÄNDE REPRÄSENTIERENDER SYMBOLE MIT HÖHERER INTEGRATIONSDICHTE**

(30) Priorität: 09.03.2022 DE 102022105529
(71) Anmelder: Preh GmbH, 97616 Bad Neustadt a.d. Saale (DE)
(72) Erfinder: DÜNNINGER, Johannes, 97723 Oberthulba (DE)
(74) Vertreter: Lohmanns, Bernard

(57) **Zusammenfassung**

Die Erfindung betrifft eine Funktionsanzeige (1) zur selektiven Anzeige mehrerer jeweils eine Schaltfunktion und/oder einen Schaltzustand repräsentierenden Symbole, insbesondere für ein Kraftfahrzeug, aufweisend:
mindestens einen Lichtleiter (2) aus einem transparenten oder transluzenten Material, wobei der Lichtleiter einen flächigen Anzeigeabschnitt (2a) aufweist, der zwei gegenüberliegende Hauptflächen (8, 9) aufweist, von denen eine Hauptfläche (8) einem Betrachter (B) als Anzeigefläche zugewandt und die andere Hauptfläche (9) dem Betrachter (B) abgewandt ist und der Lichtleiter (2) ferner mindestens zwei Lichtzuführabschnitte (2b) aufweist, mehrere Lichtquellen (14, 14'), deren Licht (L) jeweils über einen der jeweiligen Lichtquelle nächstbenachbarten Lichtzuführabschnitt (2b, 2b') der mehreren Lichtzuführabschnitte (2b, 2b') des Lichtleiters (2) in den Lichtleiter (2) eingekoppelt wird und weiter aus Sicht des Betrachters (B) in einer seitlichen Richtung in den Anzeigeabschnitt (2a) geleitet wird; wobei mindestens eine Hauptfläche (8,9) der Hauptflächen (8, 9) des Anzeigeabschnitts (2a) des Lichtleiters (2) mittels mehrerer in die jeweilige Hauptfläche (8) eingebrachter, lichtbrechend und/oder lichtstreuend wirkender Mikrostrukturen oberflächenstrukturiert ist, um mindestens zwei oberflächenstrukturierte Grenzflächenbereiche (6a, 6b) als Teilflächen der jeweiligen Hauptfläche (8, 9) in dem Lichtleiter (2) auszubilden; die aus Sicht des Betrachters (B) in einer zur seitlichen Richtung der Lichteinkopplung senkrechten Richtung versetzt angeordnet sind und jeweils ein Symbol darstellen; wobei bei jeweils aktivierter Lichtquelle (14, 14') durch Lichtbrechung und/oder Lichtstreuung im oberflächenstrukturierten Grenzflächenbereich (6a, 6b) ein Lichtaustritt des in den Lichtleiter (2) eingekoppelten Lichtes (L, L') in Richtung des Betrachters (B) bewirkt wird, so dass das jeweilig dargestellte Symbol für den Betrachter (B) durch Hinterleuchtung sichtbar ist.

## Beschreibung

Die Erfindung betrifft eine Funktionsanzeige zur selektiven Anzeige mehrerer jeweils eine Schaltfunktion und/oder eines Schaltzustands repräsentierenden Symbols. Diese Funktionsanzeigen werden beispielsweise bei einem multifunktionalen Bedienelement zur Visualisierung der mit dem Bedienelement verbundenen Schaltfunktionalitäten und/oder Schaltzuständen benötigt. Dazu werden regelmäßig elektronische Pixelmatrixanzeigen verwendet. Diese sind jedoch vergleichsweise teuer, schränken aufgrund ihrer meist rechteckigen Form die gestalterische Auslegung und Platzierung ein. Darüber hinaus leiden elektronische Pixelmatrixanzeigen bei der Darstellung statischer Anzeigeinhalte oft an einem "Einbrennen", d.h. der Anzeigeinhalt bleibt auch bei ausgeschalteter Anzeige durch optisch wahrnehmbare Schädigungen der bildgebenden Schichten der Anzeige dauerhaft und unerwünscht sichtbar. Darüber hinaus ist der Stromverbrauch derartiger elektronischer Pixelmatrixanzeigen vergleichsweise hoch. Bei gewissen Anwendungen verbietet sich zudem aufgrund der Verletzungsgefahr beispielsweise bei einem Kopfaufprall die Verwendung üblicher elektronischer Pixelmatrixanzeigen. Als Alternative zu Pixelmatrixanzeigen ist es bekannt, das in eine Stirnfläche eines Lichtleiters eingekoppelte Licht einer Lichtquelle mittels Oberflächenstrukturen an einer als Anzeigefläche dienenden Hauptfläche gezielt auszukoppeln, wobei der mit Oberflächenstrukturen versehene Bereich lediglich bereichsweise vorgesehen ist und ein Symbol oder dergleichen wiedergibt. Nachteilig dabei ist, dass pro Lichtleiter lediglich ein Symbol hinterleuchtet werden kann, da es durch unkontrollierte Lichtausbreitung im Lichtleiter zur gleichzeitigen Hinterleuchtung mehrerer Symbole kommt, falls der Versuch gewagt wird, mehrere Symbole durch oberflächenstrukturierte Bereiche in nur einem Lichtleiter vorzusehen. Eine alternative Lösung sieht vor, für jedes Symbol genau ein Lichtleiter vorzusehen und diese Lichtleiter zu stapeln. Das führt aber bei gleicher Symbolanzahl zu vergleichsweise voluminösen Funktionsanzeigen und hat aufgrund der Vielzahl von Lichtleitern den Nachteil, dass nicht nur die Transparenz der Funktionsanzeige leidet sondern auch der Kontrast und damit die Visualisierung der Symbole auf den unteren, den Betrachter fernen Lichtleitern des Stapels sich verschlechtert. Dies führt im Endeffekt dazu, dass der Betrachter, insbesondere der Fahrzeugführer, beispielsweise den tatsächlichen Schaltzustand falsch einschätzt.

Vor diesem Hintergrund ist es die Aufgabe der vorliegenden Erfindung, eine Funktionsanzeige mit der Möglichkeit zur selektiven Aktivierung der Hinterleuchtung einzelner Symbole aus mehreren Symbolen bereitzustellen, bei der Bauraum eingespart werden kann und die Visualisierung der Symbole verbessert ist, gleichzeitig aber der gestalterische Spielraum bei der Auslegung der Funktionsanzeige nicht beeinträchtigt ist, diese preiswert herzustellen ist, energiesparend und zuverlässig ist und/oder das Verletzungsrisiko insbesondere bei einem Kopfaufschlag verringert ist. Diese Aufgabe wird durch eine Funktionsanzeige des Anspruchs 1 gelöst. Ein die Funktionsanzeige integrierendes und damit entsprechend vorteilhaftes Bedienelement sowie ein das Bedienelement beinhaltendes Lenkrad sind jeweils Gegenstand der nebengeordneten Ansprüche. Vorteilhafte Ausgestaltungen sind Gegenstand der jeweils abhängigen Ansprüche. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft eine Funktionsanzeige zur selektiven Anzeige mehrerer jeweils eine Schaltfunktion und/oder einen Schaltzustand repräsentierenden Symbole, insbesondere für ein Kraftfahrzeug. Als selektive Anzeige wird nicht nur die wahlweise Anzeige unterschiedlicher Symbole aus einer Anzahl von vorgegebenen Symbolen verstanden, was bei der vorliegenden Lösung durch selektive Auswahl und elektrische Bestromung einer oder mehrerer Lichtquellen aus einer Vielzahl von Lichtquellen erreicht wird sondern auch das Einschalten und Ausschalten einer Lichtquelle, um selektiv ein Symbol durch die aktivierte Hinterleuchtung optisch für den Betrachter in Erscheinung zu bringen bzw. durch das Abschalten der Hinterleuchtung das Symbol für den Betrachter möglichst nahezu verschwinden zu lassen.

Die erfindungsgemäße Funktionsanzeige umfasst mindestens einen Lichtleiter aus mindestens einem transparenten oder transluzenten Material. Der Lichtleiter weist einen flächigen Anzeigeabschnitt auf, der zwei gegenüberliegende Hauptflächen aufweist, von denen eine Hauptfläche bei bestimmungsgemäßer Anordnung der Funktionsanzeige einem Betrachter, wie einem Fahrzeugführer, zugewandt und Anzeigefläche ist und die andere Hauptfläche dem Betrachter abgewandt ist. Der Anzeigeabschnitt des Lichtleiters weist beispielsweise zwei gegenüberliegende, bevorzugt parallel zueinander verlaufende Hauptflächen auf, die über Stirnflächen, die mit den Hauptflächen des Lichtleiters gemeinsame Kanten ausbilden, beispielsweise an den Schmalseiten und an den Längsseiten des Lichtleiters, verbunden sind. Beispielsweise sind die Stirnflächen orthogonal zu wenigstens einer Hauptfläche oder beiden Hauptflächen des Lichtleiters.

Beispielsweise handelt es sich bei dem Material, aus dem der Lichtleiter ausgebildet ist, um einen Kunststoff, bevorzugt ein Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) oder einen Glaswerkstoff. Als Hauptfläche werden beispielsweise diejenigen Flächen des Lichtleiters mit dem größten Flächeninhalt verstanden. Bevorzugt sind die Hauptflächen abgesehen von der nachfolgend beschriebenen Oberflächenstrukturierung im Wesentlichen eben ausgestaltet. Der Lichtleiter kann mit einer transparenten oder transluzenten Beschichtung, wie einer Lackschicht, versehen sein. Der Lichtleiter weist ferner mindestens zwei Lichtzuführabschnitte auf. Beispielsweise sind der Anzeigeabschnitt und die mehreren Lichtzuführabschnitte einstückig ausgebildet. Dabei sind beispielsweise die Lichtzuführabschnitte jeweils als laschenförmiger Fortsatz des Anzeigeabschnitts ausgebildet. Gemäß einer anderen Ausgestaltung sind der Lichtzuführabschnitt und der Anzeigeabschnitt jeweils als voneinander separierbare Teile des Lichtleiters ausgebildet. In einer Ausgestaltung weisen der Lichtzuführabschnitt und der Anzeigeabschnitt die gleiche, beispielsweise senkrecht zu der dem Betrachter zugewandten Hauptfläche bestimmte, Materialstärke auf.

Erfindungsgemäß weist die Funktionsanzeige mindestens zwei Lichtquellen auf, die so angeordnet ist, dass deren Licht jeweils über einen nächstbenachbarten der Lichtzuführabschnitte des Lichtleiters in den Lichtleiter eingekoppelt wird und weiter aus Sicht des Betrachters in seitlicher Richtung in den Anzeigeabschnitt des Lichtleiters geleitet wird. Bevorzugt ist für jeden Lichtzuführabschnitt genau eine nächstbenachbarte Lichtquelle vorgesehen.

Erfindungsgemäß ist mindestens eine der Hauptflächen des Anzeigeabschnitts mittels mehrerer in die jeweilige Hauptfläche eingebrachter, lichtbrechend und/oder lichtstreuend wirkender Mikrostrukturen oberflächenstrukturiert, um mindestens zwei oberflächenstrukturierte Grenzflächenbereiche als Teilflächen der jeweiligen Hauptfläche in dem Lichtleiter auszubilden, wobei die zwei oberflächenstrukturierten Grenzflächenbereiche aus Sicht des Betrachters in einer seitlichen Richtung versetzt angeordnet sind und jeweils ein Symbol darstellen. Bevorzugt überlappen die oberflächenstrukturierten Grenzflächenbereiche nicht und bevorzugter sind die oberflächenstrukturierten Grenzflächenbereiche beabstandet zueinander angeordnet. Als Mikrostruktur wird beispielsweise eine singuläre Erhebung auf der Hauptfläche oder eine singuläre Vertiefung in der Hauptfläche verstanden. Dabei liegt eine Maximalabmessung beispielsweise jeder Mikrostruktur im Bereich 1 bis 50 µm, bevorzugt im Bereich von 1 bis 25 µm. Bevorzugt sind die Mikrostrukturen gleichmäßig beabstandet über den gesamten oberflächenstrukturierten Bereich der Hauptfläche verteilt angeordnet. Bevorzugt ist die dem Betrachter zugewandte Hauptfläche mit den Mikrostrukturen versehen. Beispielsweise sind die Mikrostrukturen pyramidenförmig oder prismatisch ausgeformt. Bevorzugt sind die Mikrostrukturen gleichförmig ausgebildet, bevorzugter sind sie nicht nur übereinstimmend ausgeformt, sondern weisen eine übereinstimmende Ausrichtung auf. Eine übereinstimmende Ausrichtung ergibt sich beispielsweise bei einer ebenen Hauptfläche dann, wenn jede Mikrostruktur durch gedachte, ausschließlich translatorische gedachte Verschiebung auf eine benachbarte Mikrostruktur abgebildet werden kann. Noch bevorzugter sind die Mikrostrukturen so ausgebildet, dass sie ein aus dem Lichtleiter austretendes, kollimiertes Lichtbündel aus dem Licht erzeugen, welches von der Lichtquelle stammt und zuvor über die Stirnfläche in den Lichtleiter eingetreten ist.

Bei jeweils aktivierter Lichtquelle wird erfindungsgemäß durch Lichtbrechung und/oder Lichtstreuung im oberflächenstrukturierten Grenzflächenbereich ein Lichtaustritt des in den Lichtleiter eingekoppelten Lichtes in Richtung des Betrachters bewirkt, so dass durch den oberflächenstrukturierten Grenzflächenbereich dargestellte Symbol für den Betrachter sichtbar wird. Die Oberflächenstrukturierung bewirkt durch Lichtbrechung und/oder Lichtstreuung einen, beispielsweise im Vergleich zu einer ebenen Ausgestaltung der betreffenden Hauptfläche verstärkten Lichtaustritt in Richtung des Betrachters. Beispielsweise wird durch die Mikrostruktur jeweils ein Auftreffen des Lichtes auf eine durch die Mikrostruktur vorgegebene Grenzfläche in einem Winkel erreicht, der nicht die Totalreflexionsbedingung erfüllt, so dass das Licht den Lichtleiter im Bereich der Mikrostruktur verlässt. Durch die erfindungsgemäße Auslegung der Funktionsanzeige sind pro Lichtleiter mehrere hinterleuchtete Symbole vorgesehen, die aufgrund getrennter Hinterleuchtung über separate Lichtzuführabschnitte unabhängig voneinander und selektiv zu hinterleuchtbar sind. Dadurch, dass jeder Lichtleiter somit Träger mehrerer Symbole sein kann, kann die Anzahl der Lichtleiter reduziert werden, was nicht nur Bauraum einspart, sondern auch die Darstellungsqualität der Funktionsanzeige verbessert.

Zur Verbesserung der Lichteinkopplung und/oder zur Anpassung der Lichtabstrahlungscharakteristik der Lichtquelle an die für den Lichteintritt in den Lichtleiter bestimmte Eintrittsfläche des Lichtzuführabschnitts ist bevorzugt zwischen dem Lichtleiter und der Lichtquelle eine Linse angeordnet oder eine Linsenstruktur in die Eintrittsfläche eingearbeitet.

Erfindungsgemäß sind ferner Mittel zur wechselseitigen Lichtabschottung der Lichtzuführabschnitte und/oder der Lichtquellen vorgesehen. Beispielsweise sind die Mittel so ausgelegt, dass Licht, welches in einen Lichtzuführabschnitt eingekoppelt wurde, möglichst nicht austritt und in den benachbarten Lichtzuführabschnitt eingekoppelt wird. Zusätzlich oder alternativ sind die Mittel so ausgelegt, dass Licht einer Lichtquelle möglichst ausschließlich dem zugehörigen, nächstbenachbarten Lichtzuführabschnitt zugeführt wird und die umgebenden nicht zugehörigen Lichtzuführabschnitte gegenüber den nicht-zugehörigen Lichtquelle abgeschattet werden.

Bevorzugt umfassen die Mittel zur wechselseitigen Lichtabschottung eine opake Beschichtung des jeweiligen Lichtzuführabschnitts. Beispielsweise ist die opake Beschichtung zumindest auf den Oberflächen des Lichtzuführabschnitts vorgesehen, die benachbarten Lichtzuführabschnitten zugewandt sind.

Bevorzugt umfassen die Mittel zur wechselseitigen Lichtabschottung mindestens eine Blende mit einer sich in Richtung des zugehörigen Lichtzuführabschnitts öffnenden Blendenöffnung.

Bevorzugt sind die Lichtzuführabschnitte und die oberflächenstrukturierten Grenzflächenbereiche eines Lichtleiters so angeordnet sind, dass jeweils einer der oberflächenstrukturierten Grenzflächenbereiche einem Lichtzuführabschnitt gegenüberliegt, bevorzugter nächstbenachbart gegenüberliegt. Dadurch wird unterdrückt, dass das Licht eines Lichtzuführabschnitts neben dem jeweils zugehörigen oberflächenstrukturierten Grenzflächenbereich zu den weiteren oberflächenstrukturierten Grenzflächenbereichen desselben Lichtleiters gelangt.

Zu diesem Zweck sind bevorzugt die Lichtzuführabschnitte und die oberflächenstrukturierten Grenzflächenbereiche eines Lichtleiters derart angeordnet, dass jeweils in den Lichtzuführabschnitt eingekoppeltes Licht nicht ohne innere Reflexion im Lichtleiter zu mehr als einem der oberflächenstrukturierten Grenzflächenbereiche gelangt.

Bevorzugt sind die Lichtzuführabschnitte eines Lichtleiters so angeordnet, dass sich deren Erstreckungsrichtungen jeweils in Richtung der Lichtausbreitung betrachtet nicht schneiden und beispielsweise parallel zueinander sind.

Bevorzugt weist der Lichtzuführabschnitt eines Lichtleiters jeweils mindestens ein Paar gegenüberliegender Flanken aus, mit denen der jeweilige Lichtzuführabschnitt in den Anzeigeabschnitt mündet, deren gedachte, tangentiale Verlängerungen ein gedachtes Teilvolumen in dem zugehörigen Anzeigeabschnitt begrenzen, innerhalb dessen nur jeweils einer der oberflächenstrukturierten Grenzflächenbereiche angeordnet ist.

Bevorzugt ist der Anzeigeabschnitt reflexionsmindernd beschichtet, um eine Schicht zu erhalten, welche auch geläufig als Antireflexbeschichtung oder als Vergütung bezeichnet wird. Diese hat die Aufgabe, beispielsweise durch Lichtabsorption in der Beschichtung, die Menge des in den Lichtleiter an der beschichteten Stirnfläche reflektierten Lichtes im Vergleich zu einer unbeschichteten Stirnfläche zu reduzieren. Diese kann umlaufend, beispielsweise abgesehen vom für das Licht der Lichtquelle vorgesehenen Lichteintrittsbereich des Lichtzuführabschnitts aufgebracht sein.

Bevorzugt ist vorgesehen, dass bei lediglicher Aktivierung der zu einem Lichtzuführabschnitt zugehörigen Lichtquellen pro Lichtleiter eine Maximalleuchtdichte einer Lichtabstrahlung genau eines oberflächenstrukturierten Grenzflächenbereichs gegenüber denen der verbleibenden, oberflächenstrukturierten Grenzflächenbereiche dominierend ist, also am hellsten ist, und die gleichzeitig jeweils bestimmte Maximalleuchtdichte der verbleibenden, oberflächenstrukturierten Grenzflächenbereiche nicht mehr als 2 Prozent der Maximalleuchtdichte des dominierenden, oberflächenstrukturierten Grenzflächenbereichs ausmacht.

Bevorzugt weist der Lichtzuführabschnitt jeweils eine der nächstbenachbarten Lichtquelle zugewandte Eintrittsfläche auf, die nicht rechtwinklig zu den Hauptflächen des Anzeigeabschnitts des Lichtleiters ist. Bevorzugter ist die Eintrittsfläche des Lichtzuführabschnitts parallel zu mindestens eine der Hauptflächen des Anzeigeabschnitts des Lichtleiters.

In einer Ausgestaltung sind die Lichtquellen aus Sicht des Betrachters jeweils neben dem nächstbenachbarten Lichtzuführabschnitt angeordnet. Bevorzugt sind aus Sicht des Betrachters die Lichtquelle jeweils unterhalb des nächstbenachbarten Lichtzuführabschnitts angeordnet.

Die Oberflächenstrukturierung wird beispielsweise durch Laserablation in den Anzeigeabschnitt des Lichtleiters eingebracht. Bevorzugt wird der oberflächenstrukturierte Grenzflächenbereich durch Prägen und/oder Abformen erzeugt. Beispielsweise werden die Mikrostrukturen durch Vakuumformen oder Spritzformen mittels eines Werkzeugs in die betreffende Hauptfläche, bzw. Oberfläche, eingebracht, wobei eine formgebende Oberfläche des Werkzeugs die auf den Anzeigeabschnitt des Lichtleiters zu übertragende Struktur vorgibt.

Gemäß einer bevorzugten Ausgestaltung ist vorgesehen, dass der oberflächenstrukturierte Grenzflächenbereich des Lichtleiters gleichförmig ausgebildete 3-dimensionale Mikrostrukturen aufweist. Noch bevorzugter liegt deren mittlere Anzahldichte jeweils im Bereich zwischen 400 bis 7.000 pro mm², meist bevorzugt im Bereich zwischen 400 bis 4000 pro mm² liegt. Es hat sich gezeigt, dass eine derartige Anzahldichte im eingeschalteten Zustand der Lichtquelle eine für die optische Erkennbarkeit ausreichende Helligkeitsverteilung generiert, andererseits bei ausgeschalteter Lichtquelle optisch derart unauffällig ist, dass der oberflächenstrukturierte Bereich bei zu erwartendem Sehabstand für das "unbewaffnete" Auge nicht erkennbar ist, insbesondere der gegebenenfalls mögliche Durchblick durch die Funktionsanzeige ungetrübt ist.

Bevorzugt beträgt der Flächenanteil aller oberflächenstrukturierten Grenzflächenbereiche des Anzeigeabschnitts an der jeweiligen für den Betrachter sichtbaren Hauptfläche des Anzeigeabschnitts für jeden Lichtleiter der Funktionsanzeige nicht mehr als 0,5, bevorzugt nicht mehr als 0,3.

Bevorzugt weist die Funktionsanzeige mehrere in einem Stapel angeordnete Lichtleiter auf, von denen mindestens einer mit mehreren, ein Symbol darstellenden, oberflächenstrukturierten Grenzflächenbereichen versehen ist, bevorzugter alle mit mehreren, ein Symbol darstellenden, oberflächenstrukturierten Grenzflächenbereichen versehen sind.

Gemäß einer bevorzugten Ausgestaltung ist der Anzeigeabschnitt im außerhalb der oberflächenstrukturierten Grenzflächenbereiche liegenden Bereich für den Betrachter transparent ausgebildet.

Um eine unerwünschte Lichtausbreitung im Lichtleiter insbesondere bei Fremdlichteinwirkung zu vermeiden, weist der Lichtleiter gemäß einer bevorzugten Ausführungsform an mindestens einer der Stirnflächen, bevorzugt an der Stirnfläche, die der Lichtquelle zugewandten Stirnfläche gegenüberliegt, eine reflexionsmindernde Beschichtung auf, welche auch geläufig als Antireflexbeschichtung oder als Vergütung bezeichnet wird. Diese hat die Aufgabe, beispielsweise durch Lichtabsorption in der Beschichtung, die Menge des in den Lichtleiter an der beschichteten Stirnfläche reflektierten Lichtes gegenüber einer unbeschichteten Stirnfläche zu reduzieren. Diese kann umlaufend, beispielsweise abgesehen vom für das Licht der Lichtquelle vorgesehenen Lichteintrittsbereich aufgebracht sein.

Die Erfindung betrifft ferner ein Bedienelement mit einem für eine Berührung oder eine Betätigung bestimmten Bedienteil, in welches die Funktionsanzeige in einer der zuvor beschriebenen Ausführungsformen integriert ist. Das Bedienelement weist beispielsweise einen Fuß zur Festlegung des Bedienelements an einer Fahrzeugkomponente, wie an einem Armaturenbrett, an einer Verkleidung einer Fahrgastzelle oder insbesondere an einem Lenkrad eines Kraftfahrzeugs, auf. Dabei bildet beispielsweise die als Anzeigefläche dienende Hauptfläche eine Bedienfläche des für eine Berührung oder eine Betätigung bestimmten Bedienteils des Bedienelements aus oder sie ist unter einer wenigstens bereichsweise transparenten, die Bedienfläche ausbildenden Blende so angeordnet, dass die Hauptfläche durch die Blende sichtbar ist. Das Bedienteil ist beispielsweise als mindestens ein freitragender Hebelarm ausgebildet. Der freitragende Hebelarm ist beispielsweise einseitig mittels eines Festkörpergelenks am Fuß gelagert, um bei Einwirken einer senkrecht auf die Bedienfläche einwirkenden Bedienkraft ein Verschwenken des Bedienteils um eine gedachte Schwenkachse entgegen einer Rückstellkraft relativ zum Fuß zu ermöglichen. Beispielsweise sind ferner Mittel vorgesehen, um ein Verschwenkmaß zwischen Bedienteil und Fuß zu detektieren. Als Festkörpergelenk bezeichnet man allgemein einen Bereich eines Bauteils, welcher ein Verschwenken zwischen zwei Starrkörperbereichen durch Biegung erlaubt. Durch das Festkörpergelenk wird eine spielfreie und damit klapperfreie Lagerung des Bedienteils am Fuß erreicht. Beispielsweise werden Fuß und Bedienteil aus einem Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) ausgebildet. Das erfindungsgemäße Bedienelement eignet sich insbesondere für solche Ausgestaltungen, bei denen das maximale Verschwenkmaß um die gedachte Schwenkachse aus der unbetätigten Ruhestellung in die betätigte maximale Schwenkstellung weniger als 10°, bevorzugt weniger als 5° beträgt.

Die Erfindung betrifft ferner ein Lenkrad, beispielsweise mit einer Lenkradnabe, wenigstens einer Lenkradspeiche und mit einem durch die Lenkradspeiche getragenen Lenkradkranz. Das erfindungsgemäße Lenkrad weist ferner eine Funktionsanzeige in einer der zuvor beschriebenen Ausführungsformen auf. Bevorzugt ist die Funktionsanzeige Bestandteil eines am Lenkrad befestigten Bedienelements. Beispielsweise ist der Fuß des Bedienelements drehfest am Lenkradkranz festgelegt. Bevorzugt ist die Anzeigefläche der Funktionsanzeige zwischen dem Lenkradkranz und der Lenkradnabe bzw. einem die Lenkradnabe bedeckenden Pralltopf des Lenkrades angeordnet.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Es zeigen schematisch:
- Figur 1: eine schematische Aufsicht auf eine erfindungsgemäße Ausführungsform einer Funktionsanzeige 1;
- Figur 2: eine schematische Schnittansicht einer Ausführungsform eines erfindungsgemäßen Bedienelements 10 mit einer weiteren Ausführungsform einer erfindungsgemäßen Funktionsanzeige 1;
- Figur 3: eine schematische Schnittansicht einer weiteren Ausführungsform eines erfindungsgemäßen Bedienelements 10 mit noch einer weiteren Ausführungsform einer erfindungsgemäßen Funktionsanzeige 1;
- Figur 4: eine Aufsicht auf eine Ausführungsform eines erfindungsgemäßen Lenkrads 20 mit zwei erfindungsgemäßen Bedienelementen 10.

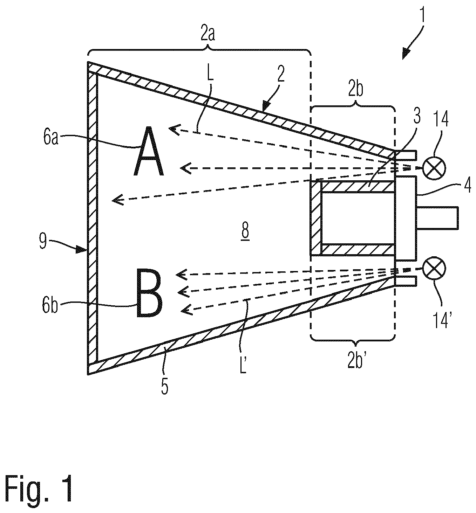

Figur 1 zeigt schematisch eine erfindungsgemäße Ausführungsform der Funktionsanzeige 1 zur selektiven Anzeige genau eines oder zur zeitgleichen Anzeige mehrerer Symbole, die jeweils eine Schaltfunktion und/oder ein Schaltzustand repräsentieren, wie beispielsweise ein Warnblinksymbol etc. Als selektive Anzeige wird insbesondere das Einschalten und Ausschalten einer Lichtquelle verstanden, um selektiv das Symbol durch die aktivierte Hinterleuchtung optisch für den Betrachter B in Erscheinung zu bringen bzw. durch das Abschalten der Hinterleuchtung das Symbol 7 für den Betrachter B nahezu verschwinden zu lassen. Dabei soll den beiden Zuständen der Lichtquelle jeweils ein anderer Schaltzustand und damit ein Funktionszustand einer Fahrzeugkomponente zugeordnet sein. Die Symbole sind in der Figur 1 durch die Buchstaben A und B dargestellt. Erfindungsgemäß umfasst die Funktionsanzeige 1 einen Lichtleiter 2 aus einem transparenten oder transluzenten Material. Der Lichtleiter 2 weist einen flächigen Anzeigeabschnitt 2a und mehrere Lichtzuführabschnitte 2b, 2b', hier zwei pro Lichtleiter 2, auf. Jedem Lichtzuführabschnitt 2b, 2b' sind jeweils eine oder mehrere Lichtquellen 14, 14' durch nächstbenachbarte Anordnung zugeordnet. Bei der gezeigten Ausführungsform ist jeweils genau eine Lichtquelle 14 14' pro Lichtzuführabschnitt 2b, 2b' vorgesehen, deren Licht L, L' über den jeweils zugehörigen Lichtzuführabschnitt 2b, 2b' in den Lichtleiter 2, insbesondere in den Anzeigeabschnitt 2a eingekoppelt wird. Dabei erfolgt die Lichteinkopplung aus Sicht des Betrachters in einer seitlichen Richtung, wie Figur 1 zeigt, die eine Ausrichtung der Funktionsanzeige 1 zeigt, die der der Funktionsanzeige 1 in bestimmungsgemäßer Einbaulage entspricht.

Der flächige Anzeigeabschnitt weist zwei gegenüberliegende Hauptflächen 8, 9 auf, von denen eine Hauptfläche 8 bei bestimmungsgemäßer Anordnung der Funktionsanzeige 1 einem Betrachter, wie einem Fahrzeugführer, zugewandt und Anzeigefläche ist, während die andere Hauptfläche 9 dem Betrachter abgewandt angeordnet ist. Als Hauptfläche 8, 9 werden diejenigen Flächen des Lichtleiters 2 mit dem größten Flächeninhalt verstanden. Die Hauptflächen 8, 9 sind über Stirnflächen verbunden und bilden die Schmalseiten des Anzeigeabschnitts 2a aus. Der Lichtleiter 2 ist beispielsweise aus einem transparenten oder transluzenten Thermoplast ausgebildet, wobei der Anzeigeabschnitt 2a mit den jeweils als laschenförmiger Fortsatz ausgebildeten Lichtzuführabschnitten 2b, 2b' einstückig verbunden ist. Die Hauptflächen 8, 9 sind abgesehen von der nachfolgend beschriebenen Oberflächenstrukturierung im Wesentlichen eben und glatt ausgestaltet. Erfindungsgemäß ist mindestens eine der Hauptflächen 8, 9 des Lichtleiters 2, hier die dem Betrachter B zugewandte Hauptfläche 8 mittels mehrerer in die Hauptfläche 8 eingebrachter, lichtbrechend und/oder lichtstreuend wirkender Mikrostrukturen bereichsweise oberflächenstrukturiert, welche als oberflächenstrukturierter Grenzflächenbereich 6a, 6b bezeichnet wird und jeweils hier die Symbole A und B darstellen.

Wie aus Figur 1 zu erkennen, sind die Lichtzuführabschnitte 2b, 2b' so angeordnet, dass sich deren Erstreckungsrichtungen jeweils in Richtung der Lichtausbreitung betrachtet nicht schneiden und hier im Wesentlichen parallel zueinander sind. Die oberflächenstrukturierten Grenzflächenbereiche 6a, 6b eines Lichtleiters 2 sind dabei so versetzt zueinander angeordnet, dass jeweils einer der oberflächenstrukturierten Grenzflächenbereiche 6a, 6b genau einem Lichtzuführabschnitt 2b, 2b' nächstbenachbart gegenüberliegt. Dadurch wird unterdrückt, dass das Licht eines Lichtzuführabschnitts 2b, 2b' neben dem jeweils zugehörigen oberflächenstrukturierten Grenzflächenbereich 6a, 6b zu den weiteren oberflächenstrukturierten Grenzflächenbereichen 6a, 6b desselben Lichtleiters 2 gelangt. Zu diesem Zweck sind ferner die Lichtzuführabschnitte 2b, 2b' und die oberflächenstrukturierten Grenzflächenbereiche 6a, 6b eines Lichtleiters 2 derart angeordnet, dass jeweils in den Lichtzuführabschnitt 2b, 2b' eingekoppeltes Licht L, L' nicht ohne innere Reflexion im Lichtleiter 2 zu mehr als einem der oberflächenstrukturierten Grenzflächenbereiche 6a, 6b gelangt.

Wie ferner in Figur 1 gezeigt, bilden die Lichtzuführabschnitte 2b, 2b' eines Lichtleiters 2 jeweils ein Paar gegenüberliegende Flanken aus, die in den Anzeigeabschnitt 2a münden, wobei die gedachten, tangentialen Verlängerungen dieser Flanken ein gedachtes Teilvolumen in dem Anzeigeabschnitt 2a begrenzen, innerhalb dem nur jeweils genau ein oberflächenstrukturierter Grenzflächenbereich, nämlich 6a in dem Teilvolumen der gedachten Verlängerung des Lichtzuführabschnitts 2b und 6b in dem Teilvolumen der gedachten Verlängerung des Lichtzuführabschnitts 2b', angeordnet ist.

Ferner ist der Anzeigeabschnitt 2a reflexionsmindernd beschichtet, um eine Schicht 5 zu erhalten, welche auch geläufig als Antireflexbeschichtung oder als Vergütung bezeichnet wird. Diese hat die Aufgabe, beispielsweise durch Lichtabsorption in der Beschichtung, die Menge des in den Lichtleiter an der beschichteten Stirnfläche reflektierten Lichtes im Vergleich zu einer unbeschichteten Stirnfläche zu reduzieren. Diese kann umlaufend, beispielsweise abgesehen vom für das Licht der Lichtquelle vorgesehenen Lichteintrittsbereich des Lichtzuführabschnitts aufgebracht sein.

Hierdurch wird erreicht, dass bei lediglicher Aktivierung der zu einem Lichtzuführabschnitt 2b bzw. 2b' zugehörigen Lichtquellen 14 bzw. 14' pro Lichtleiter 2 eine Maximalleuchtdichte einer Lichtabstrahlung genau eines oberflächenstrukturierten Grenzflächenbereichs 6a bzw. 6b gegenüber denen der verbleibenden, oberflächenstrukturierten Grenzflächenbereiche 6b bzw. 6a dominierend ist, also am hellsten ist, und die gleichzeitig jeweils bestimmte Maximalleuchtdichte der verbleibenden, oberflächenstrukturierten Grenzflächenbereiche 6b bzw. 6a nicht mehr als 2 Prozent der Maximalleuchtdichte des dominierenden, oberflächenstrukturierten Grenzflächenbereichs 6a bzw. 6b ausmacht.

Als Mikrostruktur wird bei der gezeigten Ausführungsform eine singuläre Vertiefung in der Hauptfläche 8 verstanden, deren Maximalabmessung im Bereich 1 bis 999 µm, bevorzugt im Bereich von 1 bis 25 µm liegt. Bevorzugt sind die Mikrostrukturen gleichmäßig beabstandet, aber nur über den oberflächenstrukturierten Grenzflächenbereich 6a, 6b der Hauptfläche 8 verteilt angeordnet. Dabei sind alle Mikrostrukturen gleichförmig und weisen eine übereinstimmende Ausrichtung auf und sind so ausgebildet, dass sie ein aus dem Lichtleiter 2 austretendes, kollimiertes Lichtbündel aus dem Licht L bzw. L' erzeugen, welches von der Lichtquelle 14 bzw. 14' stammt und zuvor über die Lichtzuführabschnitte 2b bzw. 2b' in den Anzeigeabschnitt 2a des Lichtleiters 2 eingetreten ist.

Bei jeweils aktivierter Lichtquelle 14, 14' wird durch Lichtbrechung und/oder Lichtstreuung im oberflächenstrukturierten Grenzflächenbereich 6a, 6b ein Lichtaustritt des in den Lichtleiter 2 eingekoppelten Lichtes L in Richtung des Betrachters B bewirkt, so dass ein durch die oberflächenstrukturierten Grenzflächenbereiche 6a bzw. 6b sich jeweils ergebendes und leuchtendes Symbol, hier A bzw. B für den Betrachter sichtbar werden.

Die Oberflächenstrukturierung bewirkt durch Lichtbrechung und/oder Lichtstreuung einen, beispielsweise im Vergleich zu einer ebenen und damit nichtoberflächenstrukturierten Ausgestaltung der betreffenden Hauptfläche 8 verstärkten Lichtaustritt in Richtung des Betrachters, was dadurch zu erklären ist, dass durch die Mikrostruktur jeweils ein Auftreffen des Lichtes L, L' auf eine durch die Mikrostruktur vorgegebene Grenzfläche in einem Winkel erreicht wird, der nicht die Totalreflexionsbedingung erfüllt, so dass das Licht L, L' den Anzeigeabschnitt 2a des Lichtleiters 2 in dem oberflächenstrukturierten Grenzflächenbereich 6a bzw. 6b aufgrund der Mikrostrukturierung verlässt. Der oberflächenstrukturierte Grenzflächenbereich 6a, 6b gibt beispielsweise das Symbol positiv als Bild, als dessen inverse Darstellung oder als dessen Umriss wieder.

Erfindungsgemäß sind ferner Mittel 3, 4 zur wechselseitigen Lichtabschottung der Lichtzuführabschnitte 2b, 2b' und der Lichtquellen 14, 14' vorgesehen. Diese umfassen Mittel, die so ausgelegt sind, dass Licht L, L', welches in einen Lichtzuführabschnitt 2b eingekoppelt wurde, möglichst nicht austritt und in den benachbarten Lichtzuführabschnitt 2b' eingekoppelt wird und umgekehrt. Dies wird beispielsweise durch eine opake Beschichtung 3 derjenigen Oberflächen des Lichtzuführabschnitts 2b, 2b' erreicht, der jeweils einem benachbarten Lichtzuführabschnitt 2b', 2b zugewandt ist. Ferner umfassen diese Mittel 3, 4 eine Blende 4, die dafür sorgt, dass Licht L, L' einer Lichtquelle 14, 14' möglichst ausschließlich dem zugehörigen, nächstbenachbarten Lichtzuführabschnitt 2b, 2b' zugeführt wird und die umgebenden, nicht zugehörigen Lichtzuführabschnitte gegenüber den nicht-zugehörigen Lichtquellen abgeschattet werden, was hier durch mehrere Blenden mit einer jeweils sich in Richtung des zugehörigen Lichtzuführabschnitts 2b, 2b' öffnenden Blendenöffnung erreicht wird. Um eine unerwünschte Lichtausbreitung im Lichtleiter 2 insbesondere bei Fremdlichteinwirkung zu vermeiden, weist der Lichtleiter 2 an mindestens einer der Stirnflächen, bevorzugt an den Stirnflächen, die den Lichtquellen 14, 14' abgewandt sind, eine reflexionsmindernde Beschichtung 5 auf, welche auch geläufig als Antireflexbeschichtung oder als Vergütung bezeichnet wird. Diese hat die Aufgabe, beispielsweise durch Lichtabsorption in der Beschichtung, die Menge des in den Lichtleiter 2 an der beschichteten Stirnfläche reflektierten Lichtes L, L' im Vergleich zu einer unbeschichteten Stirnfläche zu reduzieren. Diese kann umlaufend, beispielsweise abgesehen vom für das Licht L, L' der Lichtquelle 14, 14 vorgesehenen Lichteintrittsbereich des Lichtzuführabschnitts 2b, 2b' aufgebracht sein. Diese reflexionsmindernde Beschichtung 5 weist beispielsweise einen optischen Brechungsindex auf, der zahlenmäßig zwischen dem von Luft und dem des Materials des Lichtleiters 2 liegt.

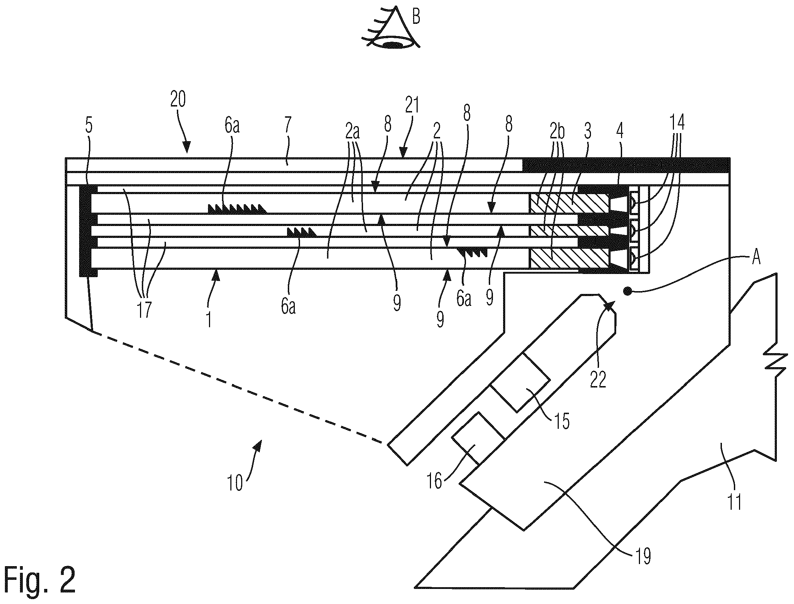

Figur 2 zeigt eine Ausführungsform des erfindungsgemäßen Bedienelements 10, welche eine weitere Ausführungsform der erfindungsgemäßen Funktionsanzeige 1 beinhaltet und die sich von der in Figur 1 unterscheidet, dass ein Stapel von Lichtleitern 2 vorgesehen ist. Dieses Bedienelement 10 weist einen Fuß 19 zur Festlegung des Bedienelements 1 an einer Fahrzeugkomponente, wie an einem Armaturenbrett, an einer Verkleidung einer Fahrgastzelle oder insbesondere an einem Lenkradkranz 11 eines Kraftfahrzeuglenkrads auf. Das erfindungsgemäße Bedienelement 10 weist ferner ein eine Bedienfläche 21 definierendes Bedienteil 20 auf, das als ein freitragender Hebelarm ausgebildet ist. Das Bedienteil 20 bzw. der freitragende Hebelarm ist einseitig mittels eines Festkörpergelenks 22 am Fuß 19 gelagert, um bei Einwirken einer senkrecht auf die Bedienfläche 21 einwirkenden Betätigungskraft ein Verschwenken des Bedienteils 20 um eine gedachte, durch das Festkörpergelenk 22 definierte Schwenkachse A entgegen einer Rückstellkraft relativ zum Fuß 3 zu ermöglichen. Das Festkörpergelenk 22 ist durch eine einstückige Verbindung zwischen dem Fuß 3 und dem Bedienteil 2 ausgebildet. Die Rückstellkraft ergibt sich beispielsweise im Wesentlichen aus der Verformung des Festkörpergelenks 22. Es sind ferner Mittel 16 vorgesehen, um ein Verschwenkmaß zwischen Bedienteil 20 und dem Fuß 19 zu detektieren, beispielsweise Mittel mit berührbehafteter Sensierung, wie elektromechanisch oder resistiv sensierende Mittel, oder bevorzugt Mittel mit berührungsloser Sensierung, wie optisch, kapazitiv oder induktiv sensierende Mittel. Das erfindungsgemäße Bedienelement 1 eignet sich insbesondere für solche Ausgestaltungen, bei denen das maximale Verschwenkmaß um die gedachte Schwenkachse A aus der in Figur 2 gezeigten unbetätigten Ruhestellung in eine maximal mögliche, betätigte Schwenkstellung weniger als 10°, bevorzugt weniger als 5° beträgt.

Erfindungsgemäß ist ferner ein durch eine nicht dargestellte Ansteuerelektronik mit einem elektrischen Ansteuersignal beaufschlagbarer Aktuator 15 zur Erzeugung eines aktiven haptischen Feedbacks, auch haptisch wahrnehmbare Rückmeldung genannt, vorgesehen, wobei der Aktuator 15 bevorzugt ausschließlich am Bedienteil 20 festgelegt ist. Bevorzugt handelt es sich bei dem Aktuator 15 um einen auf Trägheit beruhenden, motorbasierten Aktuator, wie einen Motor auf dessen rotierender Antriebswelle eine bezüglich ihres Schwerpunkts exzentrisch montierte Masse festgelegt ist oder einen Magnetspulen-Aktuator oder einen piezoelektrischen Aktuator oder einen linearen Breitbandaktuator, wie einen Tauchspulenaktuator (englische Bezeichnung; Voice-Coil-Actuator) oder einen linearen Resonanzaktuator. Bevorzugt ist der Aktuator 15 durch kraft- oder stoffschlüssige Verbindung am Bedienteil 20 festgelegt, beispielsweise durch Verschrauben oder Verkleben. Durch die ausschließliche Festlegung am Bedienteil 20 wird eine Körperschalleinkopplung in den Lenkradkranz 11 und damit in die Fahrzeugkomponente unterbunden oder zumindest minimiert.

Die das Verschwenkmaß detektierenden Mittel 16 sind ausgebildet, eine Relativbewegung, bevorzugt eine Annäherung, zwischen dem Fuß 19 und dem Bedienteil 20 bevorzugt berührungslos zu sensieren, wie kapazitiv, optisch und/oder induktiv zu detektieren. Aufgrund der durch das Festkörpergelenk 22 realisierten spielfreien Lagerung des Bedienteils 20 in Zusammenwirken mit den das Verschwenkmaß, bevorzugt berührungslos, detektierenden Mittel 16 ergibt sich eine hysteresearme bis hystereselose Detektion der Betätigungskraft, die beispielsweise vorgesehen ist, eine Schalt- oder Steuerfunktion oder zumindest die Ausgabe einer optischen, akustischen oder einer haptisch wahrnehmbaren Ausgabe zu triggern.

Die Bedienfläche 21 wird von einer bereichsweise transparenten Blende 7 ausgebildet, die dem Betrachter B den Blick auf den Anzeigebereich der darunter angeordneten Funktionsanzeige 1 freigibt. Die Funktionsanzeige 1 umfasst einen Stapel aus mehreren Lichtleitern 2, deren Anzeigeabschnitte 2a im Wesentlichen transparent ausgebildet sind, um die ungehinderte Sicht des Betrachters B bzw. Bedieners durch die Anzeigeabschnitte 2a der Funktionsanzeige 1 auf das dahinterliegende Bedienfeld, wie die Instrumente eines Armaturenbretts zu gewährleisten. Die Lichtleiter 2 sind jeweils aus einem thermoplastischen Kunststoff, insbesondere aus einer thermoplastischen Kunststofffolie und eine durch Hinterspritzen stoffschlüssig mit der Kunststofffolie verbundene Thermoplastschicht, ausgebildet und deren Anzeigeabschnitte 2a sind jeweils durch einen zwischen den Anzeigeabschnitten 2a der Lichtleiter 2 vorgesehenen Luftspalt 17 separiert. Die Anzeigeabschnitte 2a der Lichtleiter 2 bilden jeweils mindestens eine dem Betrachter zugewandte Hauptfläche 8 aus, während die beiden oberen, dem Betrachter B näheren Anzeigeabschnitte 2a der Lichtleiter 2 jeweils eine dem Betrachter B abgewandte Hauptfläche 9 aufweisen, die dem in Stapelrichtung nächstbenachbarten Anzeigeabschnitt 2a zugewandt ist. Jedem Lichtleiter 2 sind jeweils mehrere Lichtquellen 14, nämlich mehrere Leuchtdioden in SMD-Bauweise, zugeordnet, die so angeordnet sind, dass das von ihnen erzeugte Licht über einen bezüglich der Stapelrichtung seitlichen, laschenförmigen Lichtzuführabschnitt 2b des Lichtleiters 2 in den zugeordneten Lichtleiter 2 eingekoppelt wird. In der Darstellung der Figur 2 ist jeweils nur einer der zwei Lichtzuführabschnitte 2b pro Lichtleiter 2 und nur eine zugehörige nächstbenachbarte Lichtquelle 14 sichtbar. Die Anzahl der Lichtzuführabschnitte 2b entspricht der Anzahl von Symbolen, die durch den jeweiligen Lichtleiter 2 darstellbar sind. Ebenso entspricht die Anzahl der Lichtquellen 14 pro Lichtleiter 2 mindestens der Anzahl der darstellbaren Symbole pro Lichtleiter 2. In wenigstens einer der Hauptflächen 8, 9 der Anzeigeabschnitte 2a der Lichtleiter 2 sind durch mehrere Mikrostrukturen ausgebildete oberflächenstrukturierte Grenzflächenbereiche 6a durch Prägen eingebracht, die dafür sorgen, dass Licht in Richtung des Betrachters B aus dem jeweiligen Lichtleiter 2 ausgekoppelt wird. Die oberflächenstrukturierten Grenzflächenbereiche 6a sind in Form eines Symbols aufgebracht, welches bei entsprechender Aktivierung der zugehörigen Lichtquelle 14 für den Betrachter B sichtbar wird. Die Mikrostrukturen sind jeweils gleichförmig ausgebildet und weisen einen Durchmesser auf, der im Bereich von 1 bis 25 µm liegt. Die Mikrostrukturen können in den dem Betrachter B zugewandten Hauptflächen 8 und/oder dem Betrachter B abgewandten Hauptflächen 9 vorgesehen sein.

Zumindest die Anzeigeabschnitte 2a der Lichtleiter 2 sind außerhalb des oberflächenstrukturierten Grenzflächenbereichs 6a, der lediglich eine Teilfläche der jeweiligen Hauptfläche 8, 9 darstellt, transparent, so dass ein großer Teil des Anzeigeabschnitts 2a aller Lichtleiter 2 transparent verbleibt und beispielsweise die Durchsicht durch die Funktionsanzeige 1 gewährleistet ist, um dem Betrachter B die Möglichkeit zu geben, durch die Funktionsanzeige 1 hindurch andere Anzeigen oder den Straßenverlauf zu verfolgen. Dadurch ist beispielsweise die Platzierung des Bedienelements 10 an einem Lenkrad, beispielsweise im Bereich zwischen Lenkradnabe und Lenkradkranz möglich, ohne die Sicht auf das Armaturenbrett zu beeinträchtigen. Bei senkrechter Projektion der oberflächenstrukturierten Grenzflächenbereiche 6a eines Lichtleiters 2, bevorzugt aller Lichtleiter 2 des Stapels, auf die Bedienfläche 21 überlappen die projizierten oberflächenstrukturierten Grenzflächenbereiche 6a nicht, um durch Verwendung von unterschiedlichen Lichtquellen 14 pro Lichtleiter 2 andere Symbole eindeutig sichtbar machen zu können.

Um dabei jeweils unerwünschten Lichtstreuung oder Lichtabstrahlung in die benachbarten Lichtleiter 2 als auch in Richtung der anderen oberflächenstrukturierten Grenzflächenbereiche desselben Lichtleiters 2, wie beispielsweise des in Figur 1 gezeigten und mit 6b bezeichneten, oberflächenstrukturierten Grenzflächenbereichs zu vermeiden, sind Mittel zur Lichtabschottung 3, 4 vorgesehen. Diese umfassen eine Blende 4 mit den Lichtzuführabschnitten 2b der Lichtleiter 2 zugewandten Blendenöffnungen sowie eine opake Beschichtung 3, die auf den Oberflächen des Lichtzuführabschnitts 2b, insbesondere denjenigen, die dem benachbarten Lichtzuführabschnitts 2b desselben Lichtleiters 2 zugewandt sind, aufgebracht ist.

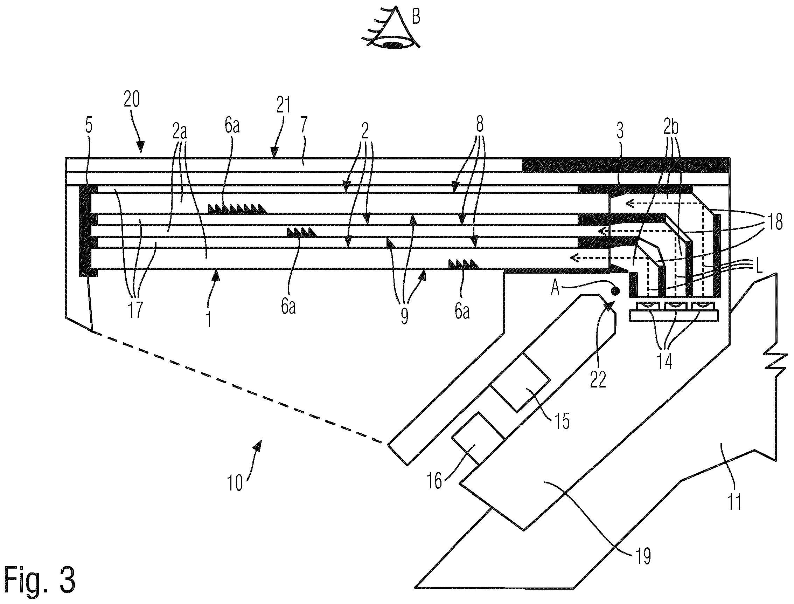

Figur 3 zeigt eine weitere Ausführungsform des erfindungsgemäßen Bedienelements 10, welches noch eine weitere Ausführungsform der erfindungsgemäßen Funktionsanzeige 1 beinhaltet. Diese unterscheidet sich im Wesentlichen durch die Ausgestaltung der Lichtzuführabschnitte 2b und die Platzierung der Lichtquellen 14 von der zuvor beschriebenen Ausführungsform. Dieses Bedienelement 10 weist ebenfalls einen Fuß 19 zur Festlegung des Bedienelements 1 an einer Fahrzeugkomponente, wie an einem Armaturenbrett, an einer Verkleidung einer Fahrgastzelle oder insbesondere an einem Lenkradkranz 11 eines Kraftfahrzeuglenkrads auf. Das erfindungsgemäße Bedienelement 10 weist ferner ein eine Bedienfläche 21 definierendes Bedienteil 20 auf, das als ein freitragender Hebelarm ausgebildet ist. Das Bedienteil 20 bzw. der freitragende Hebelarm ist einseitig mittels eines Festkörpergelenks 22 am Fuß 19 gelagert, um bei Einwirken einer senkrecht auf die Bedienfläche 21 einwirkenden Betätigungskraft ein Verschwenken des Bedienteils 20 um eine gedachte, durch das Festkörpergelenk 22 definierte Schwenkachse A entgegen einer Rückstellkraft relativ zum Fuß 3 zu ermöglichen. Das Festkörpergelenk 22 ist durch eine einstückige Verbindung zwischen dem Fuß 3 und dem Bedienteil 2 ausgebildet. Die Rückstellkraft ergibt sich beispielsweise im Wesentlichen aus der Verformung des Festkörpergelenks 22. Es sind ferner Mittel 16 vorgesehen, um ein Verschwenkmaß zwischen Bedienteil 20 und dem Fuß 19 zu detektieren, Es sind ferner Mittel 16 vorgesehen, um ein Verschwenkmaß zwischen Bedienteil 20 und dem Fuß 19 zu detektieren, beispielsweise Mittel mit berührbehafteter Sensierung, wie elektromechanisch oder resistiv sensierende Mittel, oder bevorzugt Mittel mit berührungsloser Sensierung, wie optisch, kapazitiv oder induktiv sensierende Mittel. Das erfindungsgemäße Bedienelement 1 eignet sich insbesondere für solche Ausgestaltungen, bei denen das maximale Verschwenkmaß um die gedachte Schwenkachse A aus der in Figur 2 gezeigten unbetätigten Ruhestellung in eine maximal mögliche, betätigte Schwenkstellung weniger als 10°, bevorzugt weniger als 5° beträgt.

Erfindungsgemäß ist ferner ein durch eine nicht dargestellte Ansteuerelektronik mit einem elektrischen Ansteuersignal beaufschlagbarer Aktuator 15 zur Erzeugung eines aktiven haptischen Feedbacks, auch haptisch wahrnehmbare Rückmeldung genannt, vorgesehen, wobei der Aktuator 15 bevorzugt ausschließlich am Bedienteil 20 festgelegt ist. Bevorzugt handelt es sich bei dem Aktuator 15 um einen auf Trägheit beruhenden, motorbasierten Aktuator, wie einen Motor auf dessen rotierender Antriebswelle eine bezüglich ihres Schwerpunkts exzentrisch montierte Masse festgelegt ist oder einen Magnetspulen-Aktuator oder einen piezoelektrischen Aktuator oder einen linearen Breitbandaktuator, wie einen Tauchspulenaktuator (englische Bezeichnung; Voice-Coil-Actuator) oder einen linearen Resonanzaktuator. Bevorzugt ist der Aktuator 15 durch kraft- oder stoffschlüssige Verbindung am Bedienteil 20 festgelegt, beispielsweise durch Verschrauben oder Verkleben. Durch die ausschließliche Festlegung am Bedienteil 20 wird eine Körperschalleinkopplung in den Lenkradkranz 11 und damit in die Fahrzeugkomponente unterbunden oder zumindest minimiert.

Die das Verschwenkmaß detektierenden Mittel 16 sind ausgebildet, eine Relativbewegung, bevorzugt eine Annäherung, zwischen dem Fuß 19 und dem Bedienteil 20 bevorzugt berührungslos, wie kapazitiv, optisch und/oder induktiv zu detektieren. Aufgrund der durch das Festkörpergelenk 22 realisierten spielfreien Lagerung des Bedienteils 20 in Zusammenwirken mit den das Verschwenkmaß, bevorzugt berührungslos, detektierenden Mittel 16 ergibt sich eine hysteresearme bis hystereselose Detektion der Betätigungskraft, die beispielsweise vorgesehen ist, eine Schalt- oder Steuerfunktion oder zumindest die Ausgabe einer optischen, akustischen oder einer haptisch wahrnehmbaren Ausgabe zu triggern.

Die Bedienfläche 21 wird von einer bereichsweise transparenten Deckschicht 7 ausgebildet, die dem Betrachter B den Blick auf den Anzeigebereich der darunter angeordneten Funktionsanzeige 1 freigibt. Die Funktionsanzeige 1 umfasst einen Stapel aus mehreren Lichtleitern 2, deren Anzeigeabschnitte 2a im Wesentlichen transparent ausgebildet sind, um die ungehinderte Sicht des Betrachters B bzw. Bedieners durch die Anzeigeabschnitte 2a der Funktionsanzeige 1 auf das dahinterliegende Bedienfeld, wie die Instrumente eines Armaturenbretts zu gewährleisten. Die Lichtleiter 2 sind jeweils aus einem thermoplastischen Kunststoff, insbesondere aus einer thermoplastischen Kunststofffolie und eine durch Hinterspritzen stoffschlüssig mit der Kunststofffolie verbundene Thermoplastschicht, ausgebildet und deren Anzeigeabschnitte 2a sind jeweils durch einen zwischen den Anzeigeabschnitten 2a der Lichtleiter 2 vorgesehenen Luftspalt 17 separiert. Die Anzeigeabschnitte 2a der Lichtleiter 2 bilden jeweils mindestens eine dem Betrachter zugewandte Hauptfläche 8 aus, während die beiden oberen, dem Betrachter B näheren Anzeigeabschnitte 2a der Lichtleiter 2 jeweils eine dem Betrachter B abgewandte Hauptfläche 9 aufweisen, die dem in Stapelrichtung nächstbenachbarten Anzeigeabschnitt 2a zugewandt ist. Jedem Lichtleiter 2 sind jeweils mehrere Lichtquellen 14, nämlich mehrere Leuchtdioden in SMD-Bauweise, zugeordnet, die so angeordnet sind, dass das von ihnen erzeugte Licht über einen bezüglich der Stapelrichtung seitlichen, laschenförmigen Lichtzuführabschnitt 2b des Lichtleiters 2 in den zugeordneten Lichtleiter 2 eingekoppelt wird. In der Darstellung der Figur 3 ist wiederum jeweils nur der eine gezeigte Lichtzuführabschnitt 2b pro Lichtleiter und eine zugehörige nächstbenachbarte Lichtquelle 14 sichtbar. Die Anzahl der Lichtzuführabschnitte 2b pro Lichtleiter 2 entspricht der Anzahl von Symbolen, die durch den jeweiligen Lichtleiter 2 darstellbar sind. Ebenso entspricht die Anzahl der Lichtquellen 14 pro Lichtleiter 2 mindestens der Anzahl der darstellbaren Symbole pro Lichtleiter 2. In wenigstens einer der Hauptflächen 8, 9 der Anzeigeabschnitte 2a der Lichtleiter 2 sind durch mehrere Mikrostrukturen ausgebildete oberflächenstrukturierte Grenzflächenbereiche 6a durch Prägen eingebracht, die dafür sorgen, dass Licht in Richtung des Betrachters B aus dem jeweiligen Anzeigeabschnitt 2a des jeweiligen Lichtleiters 2 ausgekoppelt wird. Die oberflächenstrukturierten Grenzflächenbereiche 6a sind in Form eines Symbols aufgebracht, welches bei entsprechender Aktivierung der zugehörigen Lichtquelle 14 für den Betrachter B sichtbar wird. Die Mikrostrukturen sind jeweils gleichförmig ausgebildet und weisen einen Durchmesser auf, der im Bereich von 1 bis 25 µm liegt. Die Mikrostrukturen können in den dem Betrachter B zugewandten Hauptflächen 8 und/oder dem Betrachter B abgewandten Hauptflächen 9 vorgesehen sein.

Zumindest die Anzeigeabschnitte 2a der Lichtleiter 2 sind außerhalb des oberflächenstrukturierten Grenzflächenbereichs 6a, der lediglich eine Teilfläche der jeweiligen Hauptfläche 8, 9 darstellt, transparent, so dass ein großer Teil des Anzeigeabschnitts 2a aller Lichtleiter 2 transparent verbleibt und beispielsweise die Durchsicht durch die Funktionsanzeige 1 gewährleistet ist, um dem Betrachter B die Möglichkeit zu geben, durch die Funktionsanzeige 1 hindurch andere Anzeigen oder den Straßenverlauf zu verfolgen. Dadurch ist beispielsweise die Platzierung des Bedienelements 10 an einem Lenkrad, beispielsweise im Bereich zwischen Lenkradnabe und Lenkradkranz möglich, ohne die Sicht auf das Armaturenbrett zu beeinträchtigen. Bei senkrechter Projektion der oberflächenstrukturierten Grenzflächenbereiche 6a eines Lichtleiters 2, bevorzugt aller Lichtleiter 2 des Stapels, auf die Bedienfläche 21 überlappen die projizierten oberflächenstrukturierten Grenzflächenbereiche 6a nicht, um durch Verwendung von unterschiedlichen Lichtquellen 14 pro Lichtleiter 2 andere Symbole eindeutig sichtbar machen zu können.

Im Unterschied zu der in Figur 2 gezeigten Ausführungsform, sind die Lichtquellen 14 aus Sicht des Betrachters B nicht nur seitlich zu den Anzeigeabschnitten 2a der Lichtleiter 2 angeordnet, sondern aus Sicht des Betrachters unterhalb des nächstbenachbarten Lichtzuführabschnitts 2b, welche jeweils einen L-förmig gewinkelten Querschnitt aufweisen. Bei dieser Ausführungsform ergibt sich, dass alle Lichtzuführabschnitte 2b jeweils eine der nächstbenachbarten Lichtquelle 14 zugewandte Eintrittsfläche aufweisen, die im Unterschied zur Ausführungsform der Figur 2 nicht rechtwinklig zu den Hauptflächen 8, 9 des Anzeigeabschnitts 2a des Lichtleiters 2 ist, die vielmehr parallel zu den Hauptflächen 8, 9 des Anzeigeabschnitts 2a des Lichtleiters 2 ist. Um dabei jeweils unerwünschten Lichtstreuung oder Lichtabstrahlung in die benachbarten Lichtleiter 2 als auch in Richtung der anderen oberflächenstrukturierten Grenzflächenbereiche desselben Lichtleiters 2, wie beispielsweise des in Figur 1 gezeigten und mit 6b bezeichneten, oberflächenstrukturierten Grenzflächenbereichs zu vermeiden, sind Mittel zur Lichtabschottung 3 vorgesehen. Diese umfassen eine opake Beschichtung 3 welche so angeordnet ist, dass sie die Lichtzuführabschnitte 2b eines Lichtleiters 2 untereinander sowie die Lichtzuführabschnitte 2b unterschiedlicher Lichtleiter 2 untereinander optisch separiert. Um eine für die Lichtumleitung vorgesehene innere Reflexionsfläche 18 in jedem Lichtzuführabschnitt 2b zu erhalten, ist der Lichtzuführabschnitt 2b bereichsweise unbeschichtet.

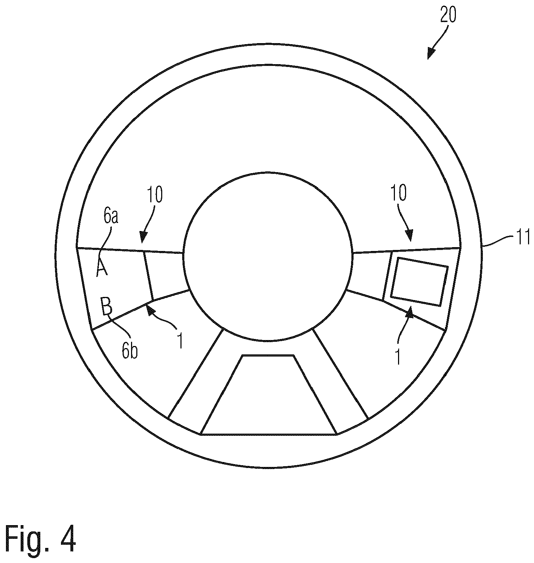

Die Erfindung betrifft ferner, wie in Figur 4 gezeigt, ein Lenkrad 20. Das Lenkrad 20 weist einen eine Lenkradnabe bedeckenden Pralltopf wenigstens eine Lenkradspeiche und einen durch die Lenkradspeiche getragenen Lenkradkranz 11 auf. Das erfindungsgemäße Lenkrad 20 weist ferner zwei Funktionsanzeigen 1 auf, die jeweils Bestandteil eines am Lenkrad 20 befestigten Bedienelements 10 sind und in das jeweilige Bedienteil integriert sind, welches schwenkbeweglich an einem Fuß des Bedienelements 10 gelagert ist. Dabei ist der Fuß des Bedienelements 10 drehfest am Lenkradkranz 11 festgelegt. Die weitgehend transparente Anzeigefläche der Funktionsanzeige 1 ist zwischen dem Lenkradkranz 11 und der Lenkradnabe bzw. dem die Lenkradnabe bedeckenden Pralltopf des Lenkrades 20 angeordnet. Bei selektiver Aktivierung der zur Funktionsanzeige 1 gehörenden Lichtquellen werden in Abhängigkeit dieser Selektion unterschiedliche Symbole wiedergebende oberflächenstrukturierte Grenzflächenbereiche 6a, 6b im Bereich der Anzeigefläche der Funktionsanzeigen 1 für den Betrachter, d.h. Fahrer, sichtbar, während durch die Transparenz der Funktionsanzeige 1 im verbleibenden Bereich das für den Fahrer hinter dem Lenkrad 20 liegende Armaturenbrett bzw. dessen Instrumentierung sichtbar ist.

## Patentansprüche

1. Funktionsanzeige (1) zur selektiven Anzeige mehrerer jeweils eine Schaltfunktion und/oder einen Schaltzustand repräsentierenden Symbole, insbesondere für ein Kraftfahrzeug, aufweisend:
mindestens einen Lichtleiter (2) aus einem transparenten oder transluzenten Material, wobei der Lichtleiter einen flächigen Anzeigeabschnitt (2a) aufweist, der zwei gegenüberliegende Hauptflächen (8, 9) aufweist, von denen eine Hauptfläche (8) einem Betrachter (B) als Anzeigefläche zugewandt und die andere Hauptfläche (9) dem Betrachter (B) abgewandt ist und der Lichtleiter (2) ferner mindestens zwei Lichtzuführabschnitte (2b) aufweist;
mehrere Lichtquellen (14, 14'), deren Licht (L) jeweils über einen der jeweiligen Lichtquelle nächstbenachbarten Lichtzuführabschnitt (2b, 2b') der mehreren Lichtzuführabschnitte (2b, 2b') des Lichtleiters (2) in den Lichtleiter (2) eingekoppelt wird und weiter aus Sicht des Betrachters (B) in einer seitlichen Richtung in den Anzeigeabschnitt (2a) geleitet wird;
wobei mindestens eine Hauptfläche (8,9) der Hauptflächen (8, 9) des Anzeigeabschnitts (2a) des Lichtleiters (2) mittels mehrerer in die jeweilige Hauptfläche (8) eingebrachter, lichtbrechend und/oder lichtstreuend wirkender Mikrostrukturen oberflächenstrukturiert ist, um mindestens zwei oberflächenstrukturierte Grenzflächenbereiche (6a, 6b) als Teilflächen der jeweiligen Hauptfläche (8, 9) in dem Lichtleiter (2) auszubilden; die aus Sicht des Betrachters (B) in einer seitlichen Richtung versetzt angeordnet sind und jeweils ein Symbol darstellen;
wobei bei jeweils aktivierter Lichtquelle (14, 14') durch Lichtbrechung und/oder Lichtstreuung im oberflächenstrukturierten Grenzflächenbereich (6a, 6b) ein Lichtaustritt des in den Lichtleiter (2) eingekoppelten Lichtes (L, L') in Richtung des Betrachters (B) bewirkt wird, so dass das jeweilig dargestellte Symbol für den Betrachter (B) durch Hinterleuchtung sichtbar ist.

2. Funktionsanzeige gemäß Anspruch 1, wobei Mittel (3, 4) zur wechselseitigen Lichtabschottung der Lichtzuführabschnitte (2b, 2b') und/oder der Lichtquellen (14, 14') vorgesehen sind.

3. Funktionsanzeige (1) gemäß dem vorhergehenden Anspruch, wobei die Mittel (3, 4) zur wechselseitigen Lichtabschottung eine opake Beschichtung (3) des jeweiligen Lichtzuführabschnitts (2b, 2b') aufweisen.

4. Funktionsanzeige (1) gemäß einem der beiden vorhergehenden Ansprüche, wobei die Mittel (3, 4) zur wechselseitigen Lichtabschottung mindestens eine Blende (4) mit einer sich in Richtung des zugehörigen Lichtzuführabschnitts (2b, 2b') öffnenden Blendenöffnung aufweisen.

5. Funktionsanzeige (1) gemäß einem der vorhergehenden Ansprüche, wobei die Lichtzuführabschnitte (2b, 2b') und die oberflächenstrukturierten Grenzflächenbereiche (6a, 6b) eines Lichtleiters (2) so angeordnet sind, dass jeweils einer der oberflächenstrukturierten Grenzflächenbereiche (6a, 6b) einem Lichtzuführabschnitt (2b, 2b') gegenüberliegt, bevorzugt nächstbenachbart gegenüberliegt.

6. Funktionsanzeige (1) gemäß einem der vorhergehenden Ansprüche, wobei die Lichtzuführabschnitte (2b, 2b') und die oberflächenstrukturierten Grenzflächenbereiche (6a, 6b) eines Lichtleiters (2) so angeordnet sind, dass in den Lichtzuführabschnitt (2b, 2B') eingekoppeltes Licht (L, L') nicht ohne innere Reflexion im Lichtleiter (2) zu mehr als einem der oberflächenstrukturierten Grenzflächenbereiche (6a, 6b) gelangt.

7. Funktionsanzeige (1) gemäß einem der vorhergehenden Ansprüche, wobei die Lichtzuführabschnitte (2b, 2b') eines Lichtleiters (2) jeweils ein Paar gegenüberliegende Flanken ausbilden, die in den Anzeigeabschnitt (2a) münden, wobei die gedachten, tangentialen Verlängerungen der Flanken ein gedachtes Teilvolumen in dem Anzeigeabschnitt (2a) begrenzen, innerhalb dem nur jeweils genau ein oberflächenstrukturierter Grenzflächenbereich (6a, 6b) angeordnet ist.

8. Funktionsanzeige (1) gemäß einem der vorhergehenden Ansprüche, wobei der Anzeigeabschnitt (2a) reflexionsmindernd beschichtet ist.

9. Funktionsanzeige (1) gemäß einem der vorhergehenden Ansprüche, wobei bei lediglicher Aktivierung der zu einem Lichtzuführabschnitt (2b, 2b') zugehörigen Lichtquellen (14, 14') pro Lichtleiter (2) genau eine Maximalleuchtdichte einer Lichtabstrahlung genau eines oberflächenstrukturierten Grenzflächenbereichs (6a, 6b) gegenüber denen der verbleibenden, oberflächenstrukturierten Grenzflächenbereiche (6a, 6b) dominierend ist, also am hellsten ist, und die gleichzeitig jeweils bestimmte Maximalleuchtdichte der verbleibenden, oberflächenstrukturierten Grenzflächenbereiche (6a, 6b) nicht mehr als 2 Prozent der Maximalleuchtdichte des dominierenden, oberflächenstrukturierten Grenzflächenbereichs (6a, 6b) ausmacht.

10. Funktionsanzeige (1) gemäß einem der vorhergehenden Ansprüche, wobei der Lichtzuführabschnitt (2b, 2b') jeweils eine der nächstbenachbarten Lichtquelle (14, 14') zugewandte Eintrittsfläche aufweist, die nicht rechtwinklig zu den Hauptflächen (8, 9) des Anzeigeabschnitts (2a) des Lichtleiters (2) ist, die bevorzugt parallel zu mindestens eine der Hauptflächen (8, 9) des Anzeigeabschnitts (2a) des Lichtleiters (2) ist.

11. Funktionsanzeige gemäß einem der vorhergehenden Ansprüche, wobei aus Sicht des Betrachters (B) die Lichtquelle (14) jeweils unterhalb des nächstbenachbarten Lichtzuführabschnitts (2b) angeordnet ist.

12. Funktionsanzeige (1) gemäß einem der vorhergehenden Ansprüche, wobei der oberflächenstrukturierte Grenzflächenbereich (6a, 6b) durch Prägen und/oder Abformen erzeugt sind.

13. Funktionsanzeige (1) gemäß einem der vorhergehenden Ansprüche, wobei der oberflächenstrukturierte Grenzflächenbereich (6a, 6b) des Anzeigeabschnitts (2a) des Lichtleiters (2) gleichförmig ausgebildete, 3-dimensionale Mikrostrukturen aufweist, deren mittlere Anzahldichte bevorzugt im Bereich zwischen 400 bis 7.000 pro mm², bevorzugter im Bereich zwischen 400 bis 4000 pro mm², liegt.

14. Funktionsanzeige (1) gemäß dem vorhergehenden Anspruch, wobei die Mikrostrukturen der oberflächenstrukturierten Grenzflächenbereiche (6a, 6b) jeweils eine Maximalabmessung aufweisen, die im Bereich von 1 bis 50 µm, bevorzugt im Bereich von 1 bis 25 µm, liegt.

15. Funktionsanzeige (1) gemäß einem der vorhergehenden Ansprüche, wobei ein Flächenanteil aller oberflächenstrukturierten Grenzflächenbereiche (6a, 6b) des Anzeigeabschnitts (2a) des Lichtleiters (2) an der jeweiligen für den Betrachter sichtbaren Hauptfläche (8) des Anzeigeabschnitts für jeden Lichtleiter (2) nicht mehr als 0,5, bevorzugt mehr als 0,3, beträgt.

16. Funktionsanzeige (1) gemäß einem der vorhergehenden Ansprüche, wobei die Funktionsanzeige (1) mehrere in einem Stapel angeordnete Lichtleiter (2) aufweist.

17. Funktionsanzeige (1) gemäß einem der vorhergehenden Ansprüche, wobei der Anzeigeabschnitt (2a) des Lichtleiters (2) im außerhalb der oberflächenstrukturierten Grenzflächenbereiche (6a, 6b) liegenden Bereich für den Betrachter (B) transparent ist.

18. Bedienelement (10) aufweisend eine Funktionsanzeige (1), gemäß einem der vorhergehenden Ansprüche und ein für eine Berührung oder eine Betätigung bestimmtes Bedienteil (20), wobei die Funktionsanzeige (1) in das Bedienteil (20) integriert ist.

19. Lenkrad (20) für ein Kraftfahrzeug, aufweisend ein Bedienelement (10) gemäß dem vorhergehenden Anspruch.
